# EUROPEAN PATENT SPECIFICATION

(11) **EP 1 876 091 B1**
(45) Date of publication and mention of the grant of the patent: **25.12.2013**
(21) Application number: 07425402.0
(22) Date of filing: 02.07.2007
(51) Int. Cl.: B62M 1/12, B62M 1/14

(54) **Auxiliary driving apparatus for a wheeled light vehicle and vehicle incorporating such an apparatus**
Zusatzantriebsapparat für ein Leichtradfahrzeug und ein Fahrzeug, das einen solchen Apparat enthält
Appareil d'entraînement auxiliaire pour véhicule à roues légères, et véhicule comprenant un tel appareil

(30) Priority: 03.07.2006 IT PD20060268
(43) Date of publication of application: 09.01.2008
(73) Proprietor: Simionato, Umberto, 35141 Padova (PD) (IT)
(72) Inventor: Simionato, Umberto, 35141 Padova (PD) (IT)
(74) Representative: Baldissera, Marco Felice

(56) References cited:
- DE-A1- 3 239 548
- DE-A1- 3 629 851
- GB-A- 427 767
- US-A- 534 537
- US-A- 5 542 689

## Description

The object of the present invention is an auxiliary driving device for a light vehicle on wheels, and a structure of vehicle incorporating such a device. The invention is especially, while not exclusively, applicable to bicycles.

It is known that light vehicles on wheels, such as bicycles, have a structure essentially comprising a supporting frame, a directional wheel associated with said supporting frame at the front, operating means connected in a rotating manner to said supporting frame and in a fixed manner to said directional wheel, a driving wheel associated with said supporting frame at the rear, and a main driving device operable with the lower limbs, applied to said supporting frame and cinematically connected to said driving wheel.

The main drawback encountered in these vehicles, and especially in bicycles, consists in the fact that their motion is operated solely by the muscle force of the user's lower limbs. It is well known, however, that the human being has a natural tendency to coordinate the motions of the upper limbs with those of the lower limbs. Just as the human being in fact moves the upper limbs in a simultaneous and coordinated fashion with the lower limbs, the bicycle user's upper limbs alternatively exercise a pressure on the operating means corresponding to the alternating pressure exercised by the lower limbs on the main driving device. In the current usage of these vehicles, about half of the user's muscle potential consequently remains unused. For this reason, these vehicles are considered "incomplete".

US 534 537 *teaches an auxiliary driving apparatus for a wheeled vehicle according to the preamble of claim 1 and comprising supporting means associated with the directional wheel, generating means to be driven by the upper limbs and connected to said supporting means in order to generate an auxiliary driving force, transferring means attached to said generating means to transfer said auxiliary driving force to the central area of said directional wheel, and converting means connected to said transferring means and to said directional wheel so as to convert said auxiliary driving force into an auxiliary rotating moment able to cause the forward motion of said vehicle.*

DE 32 39 548 *teaches an auxiliary driving apparatus for a wheeled vehicle as above where said transferring means comprises a jointed device.*

The aim of the present invention is to set up an auxiliary driving device for a light vehicle on wheels and a structure of a vehicle incorporating such a device, able of overcoming the drawbacks and problems raised in the existing light vehicles on wheels.

Within this aim, an important object of the present invention is to set up a device capable of enabling a light vehicle on wheels to fully exploit the potential of the both the user's upper and lower limb muscular system.

Another object of the present invention is to set up a device and a vehicle suitable for training and rehabilitation scopes.

A further object of the present invention is to set up a device and a vehicle of simple and intuitive use.

Not the last object of the present invention is to set up a device of an economical construction and quick and simple installation.

This aim, as well as these and other objects that will more clearly appear in the following, are achieved by an auxiliary driving apparatus for a light vehicle on wheels and by a structure of a vehicle incorporating such a device in accordance with the attached claims.

According to first advantageous features of the invention, the muscular driving device for a light vehicle on wheels comprises above all supporting means associated with at least one directional wheel of said vehicle. Said device also comprises generating means capable of being driven by the upper limbs and connected to said supporting means to generate an auxiliary driving force. Such a device further comprises transferring means firmly attached to said generating means so as to transfer said auxiliary force to the central portion of the mentioned directional wheel. Finally, said device comprises converting means connected to said transferring means in an articulated manner and to the mentioned directional wheel in a detachable manner, so as to convert the auxiliary driving force to an auxiliary rotating moment. Consequently, said auxiliary rotating moment determines a rotation of said directional wheel in a forward direction of the vehicle.

This solution allows achieving the aim of the invention, due to the fact that in using a vehicle incorporating such a device, the user engages the lower limbs in the main driving apparatus and the upper limbs in the auxiliary driving device, so as to fully exploit the potential of his muscular force.

This solution further allows achieving another object of the invention, in that the vehicles, for instance the bicycles, fitted with this device become suitable for both rehabilitating and training purposes, thanks to the fact that they engage the entire muscular system of the user's upper and lower limbs.

Moreover, this solution allows achieving a further object of the invention because, as will be evident from the description to follow, both the device as well as the vehicle incorporating this device turn out to be of a simple and intuitive use.

In conclusion, this solution allows achieving an additional object of the invention because, as will be evident from the description to follow, the construction of the device appears to be economically advantageous as well as quickly and simply installed.

These and other advantageous features of the invention will be better evident from the description of an embodiment of the auxiliary driving device for a light vehicle on wheels, according to the invention, as illustrated for indicative, yet not limiting purposes, in the enclosed drawings, wherein:
- Figure 1 represents a partial, frontally raised view of a light vehicle on wheels incorporating the device according to the invention;
- Figure 2 represents a partial lateral view of the vehicle incorporating the device according to the invention of Figure 1;
- Figure 3 and 4 represent a frontal view and a partial lateral view of the vehicle of Figure 1, respectively, wherein said device appears in a first operating condition;
- Figures 5 and 6 represent a frontal view and a partial lateral view of the vehicle of Figure 1, respectively, wherein said device appears in a second operating condition;
- Figures 7 and 8 represent a frontal view and a partial lateral view of the vehicle of Figure 1, respectively, wherein said device appears in a third operating condition.

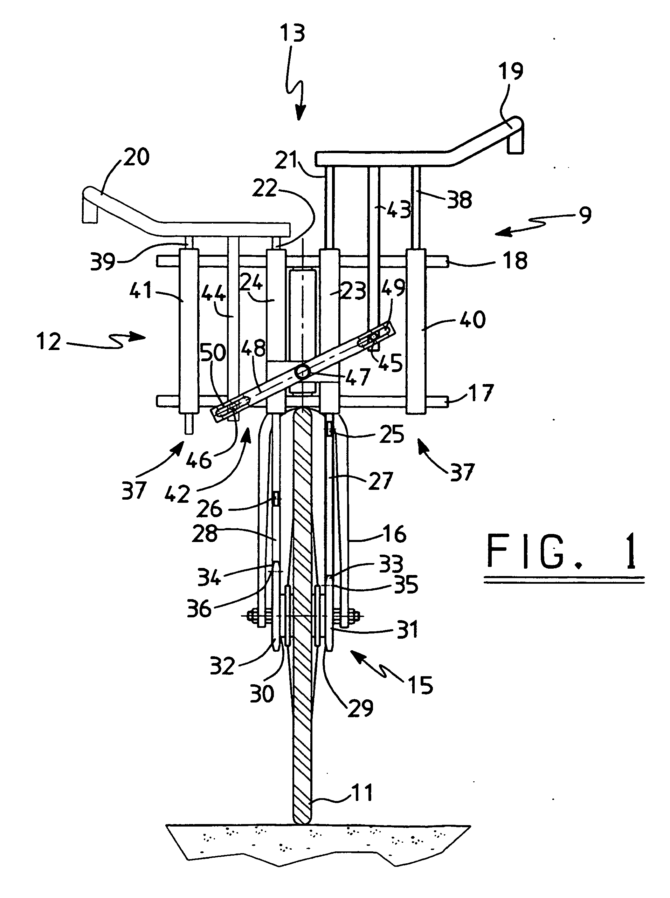

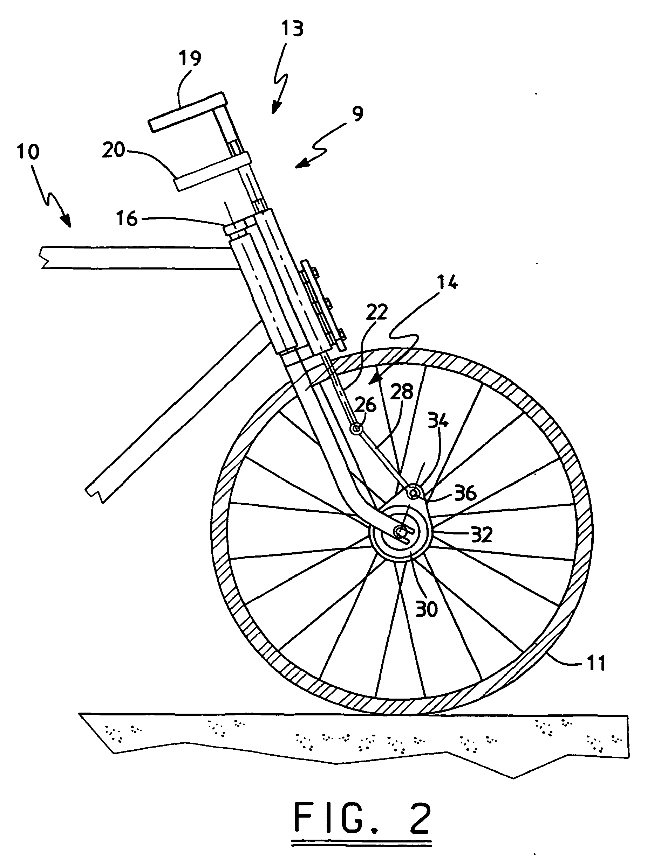

With particular reference to the mentioned figures and initially to the Figures 1 and 2, the auxiliary driving device is indicated as a whole by the reference number 9. The vehicle, in particular a bicycle, is numbered as a whole by the reference number 10. The latter's directional wheel is in turn numbered by the reference number 11.
Said device 9 comprises above all supporting means, indicated as a whole by the reference number 12, associated with said directional wheel 11.
Said device further comprises generating means, indicated as a whole by the reference number 13, capable of being driven by the upper limbs and connected to the supporting means 12 to generate an auxiliary driving force.
Moreover, said device 9 comprises transferring means designated as a whole by the reference number 14, firmly connected to generating means 13 to transfer said auxiliary driving force to the central portion of the mentioned directional wheel 11.
Finally, said device 10 comprises converting means, indicated as a whole by the reference number 15, connected to the transferring means 14 in an articulated manner, and to said directional wheel 11 in a detachable manner, so as to convert said auxiliary driving force into an auxiliary rotating moment. In this manner, said auxiliary rotating moment determines the rotation of said directional wheel of the bicycle 10 in a forward motion.
In detail, the mentioned supporting means 12 comprise a supporting element 16 of said directional wheel 11 and a pair of supporting bars, numbered by the reference numbers 17 and 18, respectively, arranged in a horizontal and parallel manner as well as rigidly connected to said supporting element 18.
Said generating means 13 in turn comprise a first and a second half handlebar 19 and 20 set side by side, which under the action of the upper limbs alternatively assume a raised and a lowered position.
Also in turn, said transferring means 14 comprise above all a first and a second push rod 21 and 22, that extend from said generating means 13 downward in parallel. Said transferring means also comprise a first and a second receiving and guiding body 23 and 24, which are in a vertical, parallel and rigid manner connected to said supporting means 12 , so as to receive and guide said first and second push rod 21 and 22. Moreover, said transferring means 14 comprise a first and a second hinge pin 25 and 26, set at the lower ends of the first and the second push rod 21 and 22. Finally, said transferring means 14 comprise a first and a second connecting rod 27 and 28 hinged at their upper end to said first and second hinge pin 25 and 26 and at their lower end to said converting means 15. Said first and second push rods 21 and 22 advantageously comprise rods of a rectangular cross section, and said first and second guide bodies 23 and 24 comprise tubular stubs of a corresponding rectangular cross section. Also advantageously, the coupling of these push rods 21 and 22 with the first and second guide bodies 23 and 24 is of a precise type.
In conclusion, said converting means 15 comprise above all a first and a second one-way rotating organ 29 and 30 associated with said directional wheel 11 in a central position and set up on both sides of said directional wheel 11. Said converting means 15 also comprise a first and a second receiving crown 31 and 32 that receive said first and second one-way rotating organ 29 and 30. Said converting means 15 further comprise a first and a second extension 33 and 34 that extend in a radial direction from said first and second receiving crown 31 and 32. Finally, said converting means 15 comprise a first and a second hinge pin 35 and 36 set up next to the ends of said first and second extension 33 and 34 and turned toward the outside to hinge said transferring means 14.

Said device 9 advantageously comprises stabilizing means, indicated as a whole by the reference number 37, associated with said supporting means 12 and connected to said generating means 13 so as to stabilize the alternating motion of said generating means 13. In detail, said stabilizing means 37 comprise above all a first and a second stabilizing rod 38 and 39 that extend in parallel downward from said first and second half handlebar 19 and 20, respectively. Said stabilizing means 37 also comprise a first and a second receiving and guiding sleeve 40 and 41 that are connected in a vertical, parallel and rigid manner to said supporting means 12, so as to receive and guide said stabilizing rods 38 and 39.
Advantageously again, said device 9 comprises moving means, designated as a whole by the reference number 42, associated with these supporting means 12 and acting on said generating means 13 to move said generating means 13. In detail, said moving means 42 comprise above all a first and a second control rod 43 and 44 that extend in parallel downward from said first and second half handlebar 19 and 20. Said moving means 42 also comprise a first and a second engaging pin 45 and 46 set up next to the lower ends of said first and second control rod 43 and 44. Said moving means 42 further comprise a supporting pin 47 that projects in a central position from said supporting means 12. Said moving means 42 also comprise a control bar 48 centrally hinged to said supporting pin 47. Finally, said moving means comprise a first and a second slotted hole 49 and 50 provided next to the ends of said control bar 48, that receive said first and second engaging pin 45 and 46 in a sliding manner.
Finally, said generating means 13 advantageously incorporate said maneuvering means of said directional wheel 11.

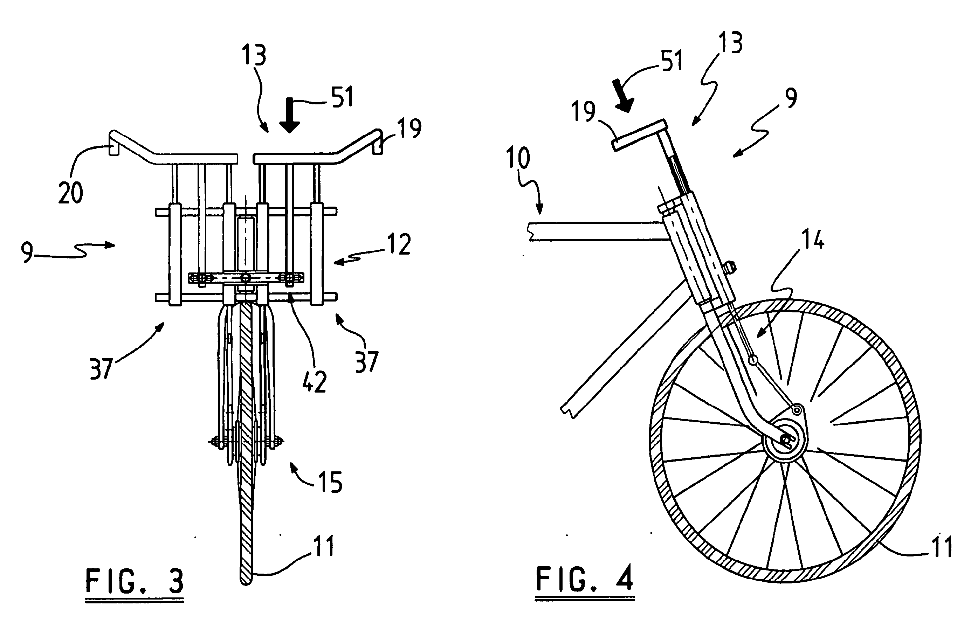

With reference to the previous figures and the Figures 3, 4, 5, 6, 7 and 8, the operation of the device 9 is as follows. Assume the starting condition of the device 9 to be as illustrated in the Figures 3 and 4. The user mounts the bicycle 10 and grips the half handlebars 19 and 20 in a traditional manner. In general, the user operates the main driving device (not shown here) in the usual manner with the lower limbs, and simultaneously the generating means 13 with the upper limbs. In detail and with special reference to the Figures 3 and 4, the user drives the main driving device with the left lower limbs while exercising a downward pressure, as shown by the arrow 51 of the Figures 3 and 4, on the first half handlebar 19 with the corresponding upper limb. This pressing action determines the auxiliary driving force. The transferring means 14 transfer said auxiliary driving force to the central area of the directional wheel 11. In detail, said transferring operation is carried out in succession by the first push rod 21 and by the first connecting rod 27. At this point the converting means 15 convert said auxiliary driving force into an auxiliary rotating moment. In detail, the hinge pin 35 receives the mentioned auxiliary driving force causing the clockwise rotation of the first extension 33, which in turn induces the rotation of the receiving crown 32 in the same sense, that in turn generates the rotation of the first one-way rotating organ 29 in the same direction which finally determines the rotation of the directional wheel 11.

During this phase, the moving means 42 are again setting up the generating means 13 for a further driving action on the same generating means 13. The downward excursion of the first half handlebar 19 causes the first control bar 43 to shift downward. The motion of the first engaging pin 45 inside the first slotted hole 49 consequently causes the control rod 48 to turn clockwise around the supporting pins 47. Consequently again, the second slotted hole 50 induces the motion of the second engaging pin 46, which causes the second control rod 44 to shift upward, which in turn causes the second half handlebar 20 to swing upward.

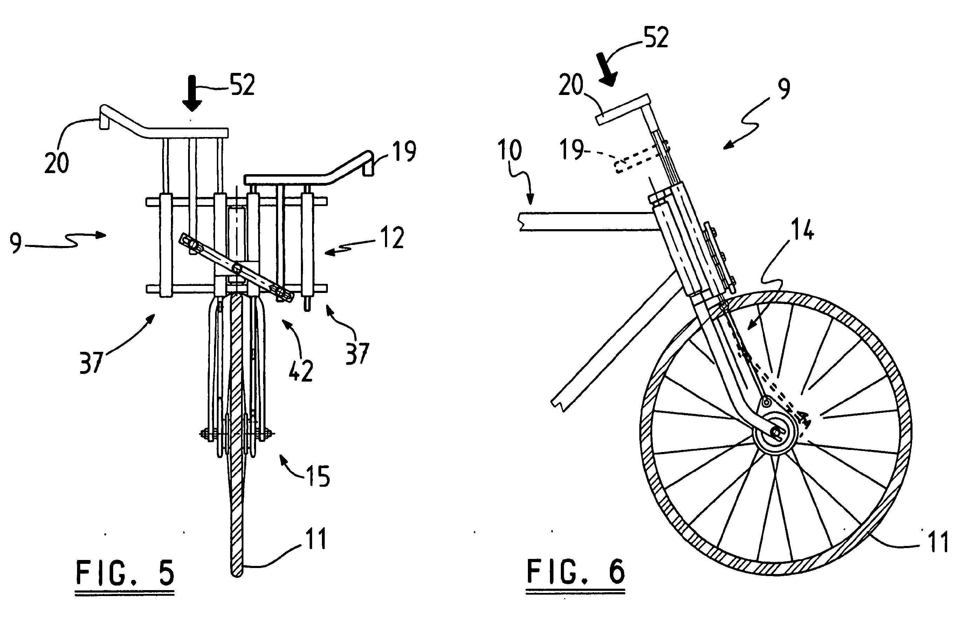

With particular reference to the Figures 5 and 6, the user thus drives the main driving device with his lower right-hand limb, while the corresponding upper limb, as exemplified by the arrow 52 of the Figures 5 and 6, exercises a downward pressure on the second half handlebar 20. This pressing action generates the auxiliary driving force. The transferring means 14 thus transfer this auxiliary driving force to the central area of the directional wheel 11. In detail, said transferring operation is carried out in succession by the second push rod 22 and the second connecting rod 28. At this point, the converting means 15 convert said auxiliary driving force into an auxiliary rotating moment. In detail, the hinge pin 36 receives the mentioned auxiliary driving force causing the second extension 35 to rotate in a clockwise direction, which in turn causes the receiving crown 32 to rotate in the same direction and in turn generate the rotation of the second one-way rotating organ 30 in the same direction, thus finally causing the directional wheel 11 to rotate.

During this phase, the moving means 42 again set up the generating means 13 for a further driving action on the generating means 13. The downward excursion of the second half handlebar 20 in fact determines the downward shifting of the second control rod 44. Consequently, the motion of the second engaging pin 46 inside the second slotted hole 50 causes the control rod 48 to turn counterclockwise around the supporting pin 47. The slotted hole 49 consequently determines the motion of the first engaging pin 45, which in turn causes the first control rod 43 to shift upward, thus in turn causing the same to shift the first half handlebar 19 upward.

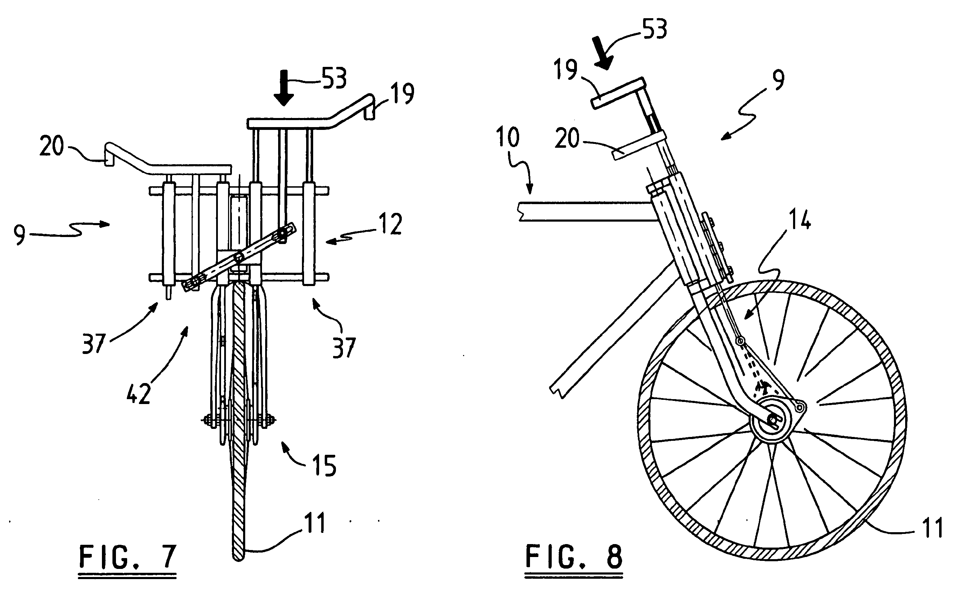

With particular reference to the Figures 7 and 8, the user then again drives the main driving device with the left lower limb, while the corresponding upper limb, as exemplified by the arrow 53 of the Figures 7 and 8, exercises a downward pressing action on the first half handlebar 19. This pressing action again generates the auxiliary driving force, which is transferred to the transferring means 14 in the central area of the directional wheel 11 and converted by the converting means 15 into an auxiliary rotating moment that in turn causes the directional wheel 11 to rotate, essentially in accordance with the previous description.

In conclusion, it seems important to note that the alternating excursion of the generating means 13 corresponds to a clockwise rotation of the directional wheel 11 by about 80°. The completion of the rotation of the directional wheel 11 derives from the normal forward motion determined by the main driving device. While completing this rotation, the auxiliary driving device 9 is disconnected from the directional wheel 11 thanks to said one-way rotating organs 29 and 30, which operatively disconnect the auxiliary driving device 9 from the directional wheel 11 like a freewheeling wheel associated with a driving wheel.

It was in practice verified that the auxiliary driving device thus described achieves its aim and the intended objects. It was in particular found that in using a vehicle incorporating such a device, the user engages the lower limbs in the main driving device and the upper limbs in the auxiliary driving device, so as fully exploit the potential of his muscle force. It was further found that the vehicles, for instance the bicycles fitted with this device, become suitable for both rehabilitating and training purposes, thanks to the fact that they engage the entire muscular system of the upper and lower limbs. It was further seen that both the device and the vehicle incorporating such a device are simple and intuitive to use. It was finally found that the construction of the apparatus is economically advantageous as well as simply and quickly installed.

The device according to the invention is susceptible of undergoing numerous modifications and variants, all of which fall within the same inventive concept.

In its practical embodiment, the materials employed, the shapes, dimensions and executive details may differ from those outlined above but be technically equivalent to them, without thereby leaving the range of the invention.

Wherever the technical features outlined in the claims are followed by numbered and/or lettered references, said numbered and/or lettered references have been added for the sole objective of enhancing the comprehension of the claims, said numbered and/or lettered references therefore do not produce any effect on any element that has been identified by said numbered and/or lettered references for purely exemplifying purposes.

## Claims

1. Auxiliary driving device (9) for a *wheeled* light vehicle (10) *comprising* supporting means (12) associated with at least one directional wheel (11) of said vehicle (10), generating means (13) capable of being driven by the upper limbs and connected to said supporting means (12) to generate an auxiliary driving force, transferring means (14) firmly attached to said generating means (13) to transfer said auxiliary driving force to the central area of said directional wheel (11), and converting means (15) connected to said transferring means (14) in an articulated manner and to said directional wheel (11) in a detachable manner, so as to convert said auxiliary driving force into an auxiliary rotating moment capable of causing said directional wheel (11) to rotate in the direction of forward motion of said vehicle (10), ***characterized in that** said transferring means (14) comprise a first and a second push rod (21, 22) that respectively extend from said generating means (13) downward in a parallel manner, a first and a second articulating pin (25, 26) set up at the lower ends of said first and second push rods (21, 22) and a first and second connecting rod (27, 28) hinged at their upper ends to said first and second articulating pin (25, 26)*, *and at their lower ends to said converting means (15)* and
**characterized in that** said converting means (15) comprise a first and a second one-way rotating organ (29, 30) associated with said directional wheel (11) in a central position and set up on both sides of said directional wheel (11), a first and a second receiving crown (31, 32) that receive said first and second one-way rotating organ (29, 30), and a first and a second extension (33, 34) that extend from said first and second receiving crown (31, 32) in a radial direction, a first and a second hinge pin (35, 36) set up next to the ends of said first and second extension (33, 34) and turned toward the outside to hinge said transferring means (14).

2. Device (9), according to claim 1, **characterized in that** said supporting means (12) comprise a supporting element (16) of said directional wheel (11) and a pair of supporting bars (17, 18) set up in a horizontal and parallel manner, as well as rigidly connected to said supporting element (16).

3. Device (9), according to claim 1 or 2, **characterized in that** said generating means (13) comprise a first and a second half handlebar (19, 20) set up side by side, which alternatively assume, under the action of the upper limbs, a raised and a lowered position.

4. Device (9), according to claim *1*, **characterized in that** said transferring means (14) comprise, a first and a second receiving/guiding body (23, 24) connected in a vertical, parallel and firmly attached manner to said supporting means (12) to receive/guide said first and second push rod (21, 22).

5. Device (9), according to claim *1*, **characterized in that** said first and a second push rods (21, 22) comprise rods of a rectangular cross section and **in that** said first and second guide bodies (23, 24) comprise tubular stubs of a corresponding rectangular cross section and again ***in* that** the coupling of said push rods (21, 22) with said first and second guide body (23, 24) is of a precise type.

6. Device (9), according to claim *1*, **characterized in that** *it* comprises stabilizing means (37) associated with said supporting means (12) and connected to said generating means (13) to stabilize the alternating motion of said generating means (13).

7. Device (9), according to claim 6, **characterized in that** said stabilizing means (37) comprise a first and a second stabilizing rod (38, 39) that respectively extend from said first and second half handlebar (19, 20) downward in parallel, a first and a second receiving/guiding sleeve (40, 41) connected in a vertical, parallel and firmly attached manner to said supporting means (12), so as to receive/guide said stabilizing rods (38, 39).

8. Device (9), according to claim *1*, **characterized in that** it comprises moving means (42) associated with said supporting means (12) and acting on said generating means (13) to move said generating means (13).

9. Device (9), according to claim 8, **characterized in that** said moving means (42) comprise a first and a second control rod (43, 44) that respectively extend from said first and second half handlebar (19, 20) downward, a first and a second engaging pin (45, 46) set up at the lower ends of said first and second control rods (43, 44), a supporting pin (47) that projects from said supporting means (12) in a central position, a controlling bar (48) centrally hinged to said supporting pin (47) and a first and a second slotted hole. (49, 50) provided next to the ends of said controlling bar (48) that respectively receives said first and second engaging pin (45, 46) in a sliding manner.

10. Device (9), according to claim *1*, **characterized in that** said generating means (13) incorporate maneuvering means for said directional wheel (11).

11. Structure of a *wheeled* light vehicle (10) comprising a supporting frame, a directional wheel (11) associated in front to said supporting frame, maneuvering means connected to said supporting frame in a rotating manner and to said directional wheel (11) in a rigid manner, a driving wheel associated in the rear with said supporting frame, a main driving device capable of being driven by the lower limbs applied to said supporting frame and cinematically connected to said driving wheel, characterized that it comprises an auxiliary driving device (9) according to claim 1.

## Patentansprüche

1. Hilfs-Antriebsapparat (9) für ein Fahrzeug auf Rädern, umfassend an mindestens einem Führungsrad (11) des genannten Fahrzeugs (10) angeschlossene Trägermittel (12), Generierungsmittel, die mit den oberen Armeen bewegbar und an die genannten Trägermittel (12) angeschlossen sind, um eine zusätzliche Antriebskraft zu erzeugen, Übertragungsmittel, (14) die an die genannten Generierungsmittel (13) fest angeschlossen sind, um die genannte zusätzliche Antriebskraft an den zentralen Bereich des genannten Führungsrades (11) zu übertragen, und Umwandlungsmittel (15), die an die genannten Übertragungsmittel (14) in gelenkiger und an das genannte Führungsrad (11) in lösbarer Weise angeschlossen sind, um die genannte zusätzliche Antriebskraft In ein zusätzliches Drehmoment zu verwandeln, das imstande ist, die Drehung des genannten Führungsrades (11) im Drehsinn einer Vorwärtsrichtung des genannten Fahrzeugs (19) zu veranlassen; **dadurch gekennzeichnet, dass** die Übertragungsmittel (14) eine erste und zweite Antriebsstange (21, 22) umfassen, die sich jeweils parallel von den genannten Generierungsmitteln (13) aus nach unten erstrecken, ein erstes und zweites Gelenk (25, 26) die an den unteren Enden der genannten ersten und zweiten Antriebsstange (21, 22) angeordnet sind, und eine erste und zweite Verbindungsstange (27, 28) die an ihrem oberen Ende mit den genannten Gelenkbolzen (25, 26) und an ihrem unterem Ende mit den genannten Umwandlungsmitteln (15) beweglich verbunden sind, **dadurch gekennzeichnet, dass** die genannten Umwandlungsmittel (15) ein erstes und ein zweites in einem einzigen Drehsinn laufendes Rotationsorgan (29, 30) umfassen, die an das genannte Führungsrad (11) in einem zentralen Punkt angeschlossen und an beiden Seiten des genannten Führungsrades (11) angeordnet sind, ein erster und zweiter Aufnahme-Zahnkranz (31, 32) die das genannte erste und zweite in einem einzigen Drehsinn laufende Rotationsorgan (29, 30) aufnehmen, eine erste und zweite Verlängerung (33, 34), die sich in einem radialen Drehsinn vom ersten und zweiten Aufnahme-Zahnkranz (31, 32) aus erstrecken und ein erster und zweiter Scharnierbolzen, die sich von der Nähe der Enden der genannten ersten und zweiten Verlängerung (33, 34) aus erstrecken und nach außen gerichtet sind, um die genannten Übertragungsmittel (14) zu drehen.

2. Antriebsapparat (9) gemäß Anspruch 1, **dadurch gekennzeichnet dass** die genannten Trägermittel (12) ein Halterungselement (16) des genannten Führungsrades (11) und ein Paar von Halterungsstangen (17, 18) umfassen, die horizontal und parallel zueinander angelegt und mit dem genannten Halterungselement (15) fest verbunden sind.

3. Antriebsapparat (9) gemäß Anspruch 1 oder 2, **dadurch gekennzeichnet dass** die genannten Generierungsmittel (13) eine erste und zweite nebeneinander liegende halbe Lenkstange (19, 20) umfassen, die aufgrund der Bewegung der unteren Glieder abwechselnd eine gehobene und eine gesenkte Lage einnehmen.

4. Antriebsapparat (9) gemäß Anspruch 1, **dadurch gekennzeichnet dass** die genannten Übertragungsmittel (14) einen ersten und einen zweiten Aufnahme/Führungskörper (23, 24) umfassen, die senkrecht, parallel zueinander und mit den genannten Halterungsmitteln (12) fest verbunden sind, um die genannte erste und zweite Antriebsstange (21, 22) aufzunehmen.

5. Antriebsapparat (9) gemäß Anspruch 1, **dadurch gekennzeichnet dass** die genannte erste und zweite Antriebsstange (21, 22) Stangen mit einem rechteckigen Querschnitt und der genannte erste und zweite Führungskörper rohrförmige Teilstücke mit einem entsprechenden rechteckigen Querschnitt umfassen, und dass die Verkopplung der genannten Antriebsstangen (21, 22) mit dem genannten ersten und zweiten Führungskörper (23, 24) eine Präzisionsverbindung darstellen.

6. Antriebsapparat (9) gemäß Anspruch 1, **dadurch gekennzeichnet dass** er Stabilisierungsmittel (37) umfasst, die an die genannten Halterungsmittel (12) angeschlossen und mit den genannten Generierungsmitteln (13) verbunden sind, um die alternative Bewegung der genannten Generierungsmittel (13) zu stabilisieren.

7. Antriebsapparat (9) gemäß Anspruch 1, **dadurch gekennzeichnet dass** die genannten Stabilisierungsmittel (37) eine erste und zweite Stabilisierungsstange (38, 39) umfassen, die sich parallel von der jeweiligen ersten und zweiten halben Lenkstange (19, 20) aus nach unten erstrecken und dass eine erste und zweite Aufnahme/Führungsmuffe (40, 41) senkrecht, parallel und mit den genannten Halterungsmitteln (12) verbunden sind, um die genannten Stabilisierungsstangen (38, 39) aufnehmen und führen zu können.

8. Antriebsapparat (9) gemäß Anspruch 1, **dadurch gekennzeichnet dass** er Fortbewegungsmittel (42) umfasst, die an die genannten Halterungsmittel (12) angeschlossen sind und auf die genannten Generierungsmittel (13) einwirken, um die genannten Generierungsmittel (13) zu bewegen.

9. Antriebsapparat (9) gemäß Anspruch 8, **dadurch gekennzeichnet dass** die genannten Fortbewegungsmittel (42) eine erste und zweite Steuerstange (43, 44) umfassen, die sich parallel von der jeweiligen ersten und halben Lenkstange aus nach unten erstrecken, erste und zweite Eingriffsbolzen (45, 46), die in der Nähe der unteren Enden der genannten ersten und zweiten Steuerstange (43, 44) angeordnet sind, einen Halterungsbolzen (47), der aus einer zentralen Stellung der genannten Halterungsmittel (12) herausragt, eine Steuerstange (48), die in den genannten Halterungsbolzen (47) eingesetzt ist und dass erste und zweite, mit einer Öse versehene Bohrungen (49, 50) in der Nähe der Enden der genannten Steuerstangen (48) vorgesehen sind, um die genannten ersten und zweiten Eingriffsbolzen (45, 46) flüssig zu empfangen.

10. Antriebsapparat (9) gemäß Anspruch 8, **dadurch gekennzeichnet dass** die genannten Generierungsmittel (13) Betätigungsmittel für das genannte Führungsrad (11) umfassen.

11. Leichtfahrzeugkonstruktion auf Rädern (10), die einen Trägerrahmen, ein an den genannten Trägerrahmen vorn angeschlossenes Führungsrad (11), drehbar mit dem genannten Trägerrahmen und steif mit dem genannten Führungsrad (11) verbundene Betätigungsmittel und einen hinten an den genannten Trägerrahmen angeschlossenen, mit den unteren Gliedern antriebbaren und mit dem genannten Antriebsrad kinematisch verbundenen Haupt-Antriebsapparat umfasst, **dadurch gekennzeichnet, dass** sie einen Hilfs-Antriebsapparat (9) gemäß Anspruch 1 umfasst.

## Revendications

1. Appareil d'entraînement auxiliaire (9) pour véhicule à roues légères comprenant des moyens de support (12) associés au moins à una roue directrice (11) du même véhicule (10), des moyens générateurs (13), pouvant être actionnés par les membres supérieurs et joints aux moyens de support cités (12) pour produire une force auxiliaire d'actionnement, des moyens de transfert (14) joints en manière solidaire aux moyens générateurs cités (13) pour transférer la force auxiliaire d'actionnement dans la partie centrale de la roue directrice (11) et des moyens de transformation (15) joints aux moyens de transfert cités (14) en manière articulée et à la roue directrice (11) en manière disjointe pour transformer la force auxiliaire d'action en un moment auxiliaire de rotation pouvant provoquer la rotation de la roue directrice (11) dans le sens d'avancement du véhicule (10), qui se **caractérise par le fait que** des moyens de transfert (14) comprennent deux tiges de poussée (21, 22) tournées parallelement vers le bas respectivement depuis les moyens générateurs (13) e deux pivots articulés (25, 26) positionnés aux extrémités inférieurs des tiges de poussée (21, 22) et deux tiges de liaison (27, 28) connectées dans la partie supérieur aux deux pivots articulés (25, 26) et inférieurement aux moyens de transformation (15) qui se caractérisent **par le fait que** ces moyens de transformation (15) comprennent deux organes de rotation unidirectionnels (29, 30) associés à la roue directrice (11) en position centrale et placés sur les deux côtés de la roue directrice (11), deux couronnes d'accueil (31, 32) qui logent les deux organes de rotation unidirectionnels (29, 30) et deux prolongements (33, 34) qui s'étendent en direction radiale depuis les deux couronnes d'accueil (31, 32), deux pivots de connection (35, 36) placés près des extrémités de ces deux prolongements (33, 34) et tournés vers l'extérieur pour connecter les moyens de transfert (14).

2. Appareil (9), suivant la revendication n. 1, qui se **caractérise par le fait que** ces moyens de support (12) comprennent un élément de soutien (16) de la roue directrice (11) et deux barres de soutien (17, 18) placées horizontellement et parallelement et jointes rigidement au moyen de soutien (16).

3. Appareil (9), suivant la revendication 1 ou 2, qui se **caractérise par le fait que** les moyens générateurs (13) comprennent deux mi-guidons (19, 20) placés l'un à côté de l'autre, qui prennent alternativement une position soulevée et une position baissée grâce à l'action des membres supérieurs.

4. Appareil (9), suivant la revendication 1, qui se **caractérise par le fait que** les moyens de transfert (14) comprennent deux corps d'accueil /guide (23, 24) connectés verticalement, parallelement et rigidement aux moyens de support (12), pour accueillir /guider les deux tiges de poussée (21, 22).

5. Appareil (9), suivant la revendication 1, qui se **caractérise par le fait que** les deux tiges de poussée (21, 22) comprennent des tiges de section rectangulaire et **par le fait que** les deux corps de guide (23, 24) sont des tubes de section rectangulaire correspondante et, en outre, **par le fait que** l'accouplement des tiges de poussée (21, 22) avec les deux corps de guide (23, 24) est parfait.

6. Appareil (9), suivant la revendication 1, qui se **caractérise par le fait qu'**il comprend des moyens de stabilisation (37) unis aux moyens de support (12) et joints aux moyens générateurs (13) pour stabiliser le mouvement alternatif des moyens générateurs (13)

7. Appareil (9), suivant la revendication 6, qui se **caractérise par le fait que** les moyens de stabilisation (37) comprennent deux tiges de stabilisation (38, 39) jointes aux deux mi-guidons (19, 20) et tournées parallelement vers le bas, deux manchons d'accueil/guide (40, 41) connectés verticalement, parallelement et rigidement aux moyens de support (12) pour accueillir/guider les deux tiges de stabilisation (38, 39).

8. Appareil (9), suivant la revendication 1, qui se **caractérise par le fait qu'**il comprend des moyens de mouvement (42) associés aux moyens de support (12) et agissant sur les moyens générateurs (13) pour mouvementer les moyens générateurs (13).

9. Appareil (9), suivant la revendication 8, qui se **caractérise par le fait que** les moyens de mouvement (42) comprennent deux tiges de commande (43, 44) jointes aux deux mi-guidons (19, 20) et tournées parallelement vers le bas, deux pivots (45, 46) placés près des extrémités inférieurs des deux tiges de commande (43, 44), un pivot de soutien (47) placé dans la partie centrale des moyens de support (12), une barre de commande (48) connectée centralement au pivot de soutien cité (47) et deux trous allongés (49, 50) placés près des extrémités de la barre de commande (48), qui accueillent respectivement les deux pivots (45, 46) leur permettant un mouvement coulissant.

10. Appareil (9), suivant la revendication 1, qui se **caractérise par le fait que** les moyens générateurs (13) incorporent les moyens de mouvement de la roue directrice (11).

11. Appareil léger sur roues (10) comprenant un cadre, une roue directrice (11) unie au cadre dans la partie antérieur, des moyens de manoeuvre connectés au cadre, mais tournants et connectés rigidement à la roue directrice (11), une roue motrice jointe au cadre dans la partie postérieur, un appareil d'actionnement principal, qui est actionné par les membres inférieurs, appliqué au cadre et joint cinématiquement à la roue motrice, qui comprend un appareil d'actionnement auxiliaire (9), suivant la revendication 1.
